Europäisches Patentamt

European Patent Office

Office européen des brevets

(19)

(11) Veröffentlichungsnummer : **0 412 277 B1**

(12) **EUROPÄISCHE PATENTSCHRIFT**

(45) Veröffentlichungstag der Patentschrift :
**19.11.92 Patentblatt 92/47**

(51) Int. Cl.$^5$ : **A23L 1/164**

(21) Anmeldenummer : **90112188.9**

(22) Anmeldetag : **27.06.90**

(54) **Verfahren zur Herstellung von Maisflocken.**

(30) Priorität : **29.07.89 DE 3925239**

(43) Veröffentlichungstag der Anmeldung :
**13.02.91 Patentblatt 91/07**

(45) Bekanntmachung des Hinweises auf die
Patenterteilung :
**19.11.92 Patentblatt 92/47**

(84) Benannte Vertragsstaaten :
**CH DE DK FR GB GR LI NL SE**

(56) Entgegenhaltungen :
**FR-A- 1 415 325**
**GB-A- 804 923**
**GB-A- 2 100 111**
**US-A- 2 446 162**

(73) Patentinhaber : **NORDGETREIDE GMBH & CO.
KG
Mecklenburger Strasse 202
W-2400 Lübeck 16 (DE)**

(72) Erfinder : **Fischbach, Werner
Fahlenkampsweg 91 a
W-2400 Lübeck (DE)**
Erfinder : **Ernst, Uta
Schulring 46
W-3300 Braunschweig (DE)**

(74) Vertreter : **Dipl.-Ing. H. Hauck, Dipl.-Ing. E.
Graalfs, Dipl.-Ing. W. Wehnert, Dr.-Ing. W.
Döring
Neuer Wall 41
W-2000 Hamburg 36 (DE)**

EP 0 412 277 B1

## Beschreibung

Die Erfindung bezieht sich auf ein Verfahren nach dem Oberbegriff des Anspruches 1.

Gängige Verfahren zur Herstellung von Maisflocken (Cornflakes) verwenden überwiegend als Ausgangsprodukt Hartmais (in erster Linie Plata-corn, aber auch andere Hartmaissorten). Bei diesem Verfahren werden die Maiskörner zunächst geschält, dann werden der Keim und das Mehl entfernt. Diese müllerische Tätigkeit erfolgt, um das für die Maisflocken (Cornflakes) notwendige Grundprodukt, die Maisgrütze, zu gewinnen.

Mit der Maisgrütze beginnt das eigentliche Maisflocken-Herstellungsverfahren:

1) Einwiegen in einen Kocher,
2) Beimengung von Zusätzen zu der Grütze, in Abhängigkeit des gewünschten Geschmacks Zucker, Malz, Salz,
3) Hinzufügen des Kochwasserbedarfs,
4) Beginn des Kochvorganges,
5) anschließendes abtrocknen-, abstehen- und abkühlenlassen,
6) Flockierung,
7) Toastung, und
8) Abpackung der Maisflocken nach Kühlung in den gewünschten Mengen und Arten (Karton, Beutel etc.).

Durch die müllerische Abtrennung von Schale, Keim und Mehl werden wesentliche ernährungsphysiologisch wertvolle Stoffe des Maiskornes entfernt.

Der Wunsch vieler Verbraucher geht jedoch heute dahin, möglichst Produkte zu verzehren, deren Zusammensetzung in etwa den Verhältnissen des natürlichen Ausgangsprodukts entspricht, aus denen sie gewonnen wurden (siehe z. B. Vollkornbrot, ungeschälter Reis etc.).

Aufgabe der Erfindung ist es daher, ein Verfahren zur Herstellung von Maisvollkornflocken zu schaffen.

Gelöst wird diese Aufgabe mit den Merkmalen des Kennzeichnungsteiles des einzigen Anspruches.

Bei dem erfindungsgemäßen Verfahren wird als Ausgangsprodukte europäischer Zahnmais anstelle des herkömmlich verwendeten Hartmaises eingesetzt. Während beim Hartmais die Vermahlung der Maiskörner zu einer Grütze erfolgt, wird erfindungsgemäß der als Ausgangsprodukt verwendete europäische Mais direkt in Form von ganzen Körnern einem Kochprozeß unterworfen. An den Kochprozeß schließen sich dann die bekannten Verfahrensschritte wie Trocknung, Auswalzen und Röstung an.

Der Erfindung liegt die überraschende Erkenntnis zugrunde, daß sich bei Verwendung von europäischem Zahnmais durch den Kochvorgang des Maiskornes ein annehmbares Vollkornflockenerzeugnis herstellen läßt, das die Nährstoffe des Mais, speziell die des Keimes und der Randschichten, enthält und wobei der Anteil dieser Nährstoffe deutlich höher ist als der der herkömmlicherweise eingesetzten Maisgrütze.

Hierzu einige Werte:

|  | Mais | Maisgrütze |
|---|---|---|
| Feuchtigkeit | 13,5 - 14,5 % | 13,5 - 14,5 % |
| Fett i.Tr. | 4 - 4,5 % | 0,8 - 0,9 % |
| Asche i.Tr. | 1,25 - 1,35 % | 0,45 - 0,65 % |
| Stärke i.Tr. | 63 - 67 % | 78 - 81 % |
| Protein i.Tr. | 8 - 9,5 % | 8,4 - 9 % |
| Rohfaser i.Tr. | 2,5 - 3 % | 0,4 - 0,6 % |

Hartmais unterscheidet sich von Zahnmais, wie sein Name schon andeutet, hauptsächlich dadurch, daß derselbe deutlich härter ist. Um nicht geschälten Hartmais in einem Kochprozeß aufzuschließen, ist es daher wahrscheinlich notwendig, sehr lange Kochzeiten anzuwenden. Einmal abgesehen davon, daß ein derartig ausgedehnter Kochvorgang aufwendiger ist, werden dabei auch die in dem Korn enthaltenen Proteine, Vitamine etc. zerstört.

Die mit der Verwendung von Hartmais einhergehenden aufgezeigten Probleme ließen sich allenfalls dadurch lösen, daß das Maiskorn aufgemahlen wird und das so gewonnene Mehl über einen Extruder zu Flocken verarbeitet wird.

Die Vorteile der vorliegenden Erfindung sind also insbesondere in der Tatsache zu sehen, daß erstmalig ein Verfahren zur Herstellung von Maisvollkornflocken geschaffen wird, bei dem von dem intakten, ganzen Korn ausgegangen wird.

Darüber hinaus ist das Verfahren aufgrund der relativ kurzen Kochzeit schonend und sehr einfach durchzuführen.

Besonders zur Durchführung der Erfindung geeignet sind Zahnmaissorten, die z.B. im Raum Freiburg, Kaiserstuhlgebiet unter dem Namen "Dea" oder "Vivas" sowie die Gelbmaissorte "Dea", die im Elsaß und im Gebiet Pau/Bayonne (Frankreich) angebaut werden.

Das erfindungsgemäße Verfahren soll im folgenden anhand eines Beispiels näher erläutert werden:

Beispiel

250 kg Maiskörner der Maissorte "Dea" wurden in einem Dampfdruckbehälter bei einem Wasserdampfdruck von $1,5.10^5$ Pa überduch (1,5 atü) für eine Dauer von 2 Stunden gekocht. Die aufgeschlossenen Maiskörner wurden dann in einer Trocknungsvorrichtung bei 52 °C bis auf eine Restfeuchtigkeit von 24 % Wasser getrocknet. In einem bekannten Walzprozeß wurden dann aus dem vorgetrockneten Produkt Flocken geprägt. Die abschließende Röstung der Flocken erfolgte bei 255 °C über einen Zeitraum von 3 Minuten in einem Heißluftofen. Das erhaltene Gut hatte ein durchschnittliches Schüttgewicht von 100 gr. = 750 ml.

**Patentansprüche**

1. Verfahren zur Herstellung von Maisflocken, bei dem ein Ausgangsprodukt auf Maisbasis in einem Mehrstufenprozeß gekocht, getrocknet, ausgewalzt und geröstet wird, dadurch gekennzeichnet, daß als Ausgangsprodukt intakte, ganze Körner der Sorte europäischer Zahnmais eingesetzt werden, und der Kochprozeß in einem konventionellen Koch- und/oder Druckbehältnis vorgenommen wird.

**Claims**

1. Process for the production of cornflakes, in the course of which a primary product on basis of corn is boiled, dried, rolled out and roasted in a multi-stage process, characterized in that as primary product intact and entire grains of the sort of european toothed corn are charged and in that the boiling process is carried out in a conventional boiling and/or pressure tank.

**Revendications**

1. Procédé pour la production de flocons de maïs, par laquelle le produit de départ sur base de maïs est cuit, séché, étendu au rouleau et grillé dans un processus à plusieurs étages, characterisé en ce que comme produit de départ sont placés des grains intactes et entiers de la sorte du maïs europeen dentellé et en ce que le processus de cuire a lieu dans un réservoir à cuire et/ou a pression conventionelle.